# EUROPÄISCHE PATENTSCHRIFT

(11) **EP 0 989 494 B1**
(45) Veröffentlichungstag und Bekanntmachung des Hinweises auf die Patenterteilung: **19.08.2009**
(21) Anmeldenummer: 99118469.8
(22) Anmeldetag: 17.09.1999
(51) Int. Cl.: G06F 11/16

(54) **Zweikanaliger sicherheitsgerichteter Zähler**
Dual channel safe operating counter
Compteur à double canaux pour raison de sûreté

(30) Priorität: 25.09.1998 DE 19844129
(43) Veröffentlichungstag der Anmeldung: 29.03.2000
(73) Patentinhaber: SIEMENS AKTIENGESELLSCHAFT, 80333 München (DE)
(72) Erfinder: Schütz, Hartmut, 91336 Heroldsbach (DE); Maier, Mario, 92224 Amberg (DE)

(56) Entgegenhaltungen:
- DE-B1- 1 675 170
- US-A- 4 189 635

## Beschreibung

Die vorliegende Erfindung betrifft ein Verfahren zum Betrieb einer zumindest 2-kanalig ausgebildeten Zähleinheit, insbesondere zum Einsatz in Verbindung mit sicherheitsgerichteten, speicherprogrammierbaren Steuerungen, mit zumindest zwei Zählschaltungen, denen von einem externen technischen Prozeß ausgelöste Signale als Zählimpulse zugeführt werden, wobei die Zählimpulse ein Inkrementieren bzw. Dekrementieren eines Zählers in jeder Zählschaltung bewirken, wobei nach Durchlaufen von aus jeweils einer vorgegebenen Anzahl von Zählschritten zwischen einem Startwert und einem Grenzwert bestehenden Zählintervallen jedesmal ein Alarmsignal und wobei ein Vergleich der Zähler ausgelöst wird.

Ein derartiges Verfahren ist gleichermaßen aus der DE 16 75 170 B und der US 4 189 635 A bekannt.

In bekannten 2-kanaligen Zähleinheiten, wie sie z.B. von der Siemens Aktiengesellschaft angeboten und vertrieben werden, wird der Zählerstand jeweils nach Erreichen eines vorgebbaren Grenzwerts zurückgesetzt, weshalb höhere Zählbereiche im regulären Zählbetrieb selten erreicht werden. Das sicherheitstechnisch vorgeschriebene Durchlaufen des gesamten Zählbereichs innerhalb eines vorgegebenen Zeitraums, durch das die Kippfunktion der einzelnen Zählbits überprüfbar ist, wird in diesen bekannten Zähleinheiten vollständig oder abschnittsweise zwischen zwei Zählimpulsen durchgeführt. Durch diesen ergänzenden Zählertest ergibt sich ein minimal zulässiger Abstand zwischen zwei aufeinanderfolgenden Zählimpulsen, da der Test zumindest aus dem Laden eines bestimmten Zählwerts in beide Zähler, aus dem Erzeugen zumindest einer Impulsflanke zum Inkrementieren oder Dekrementieren der Zähler um mindestens einen Zählschritt und aus dem Auslesen der neuen Zählwerte besteht. Die hierfür insgesamt benötigte Zeit ist in der Regel wesentlich größer als die Zeit, die zur Synchronisation der von beiden Zählern ausgelösten Alarmsignale benötigt wird und die ohne den ergänzenden Zählertest den minimalen zulässigen Abstand zwischen zwei aufeinanderfolgenden Zählimpulsen bestimmt. Außerdem ist beim ergänzenden Zählertest grundsätzlich ein Kompromiß zwischen Testumfang und Testwirksamkeit zu schließen, da er den Nachteil hat, grundsätzlich nicht vollständig durchführbar zu sein; es ist unmöglich, jeden der 2ⁿ möglichen Grenzwerte dahingehend zu überprüfen, ob beim Erreichen des Grenzwerts ein Alarm ausgelöst wird.

Aufgabe der vorliegenden Erfindung ist es, die vom ergänzenden Zählertest bewirkte Begrenzung des Zählimpulsabstands aufzuheben.

Diese Aufgabe wird durch ein Verfahren der eingangs genannten Art dadurch gelöst, daß nach jedem Durchlaufen eines Zählintervalls die Zähler für das nächste Zählintervall mit einem neuen Startwert vorbesetzt werden, der derart festgesetzt ist, daß bis zum Erreichen des Zählerüberlaufs alle Übergange zwischen einem Zählwert 2ⁿ-1 und einen Zählwert 2ⁿ in Zählintervallen zu liegen kommen. Der ergänzende Zählertest wird demnach ersetzt durch ein dynamisches Zählverfahren. Auf diese Weise wird der gesamte Entwicklungsaufwand für den umfangreichen ergänzenden Zählertests eingespart, und außerdem steht der Speicherplatz, den der Programmcode des ergänzenden Zählertests belegen würde, für andere Zwecke zur Verfügung. Im Übrigen sind sowohl der Testumfang als auch die Testwirksamkeit gewährleistet, ohne daß ein Kompromiß zwischen beiden zu schließen wäre.

Bei kontinuierlicher Zählung ohne Abstand zwischen den Zählintervallen kann es geschehen, daß ein Zählerüberlauf - d.h. der Übergang vom Zählermaximalwert auf Null bei inkrementierendem Zählen bzw. der Übergang von Null zum Maximalwert bei dekrementierendem Zählen - wesentlich später als nach 24 Stunden eintritt. In diesem Fall würde eine Sicherheitsvorschrift verletzt, nach der jeder Übergang von 2ⁿ-1 auf 2ⁿ im Wertebereich eines Zählers innerhalb von 24 Stunden einmal erfolgt sein muß. Durch die erfindungsgemäße Vorbesetzung der Zähler wird hier Abhilfe geschaffen: die Zeit zwischen zwei Überläufen wird reduziert.
Man wählt für die Vorbesetzung der Zähler mit einem neuen Startwert vorzugsweise den Vorgänger 2ⁿ-1 einer Potenz 2ⁿ, um den für den Test wichtigen Übergang von 2ⁿ-1 nach 2ⁿ in das jeweilige Zählintervall aufzunehmen.

Berücksichtigt man im Zählalgorithmus außerdem, daß der Vorgänger der kleinsten auf einen Grenzwert folgenden Potenz von 2 den nächsten Vorbesetzungswert darstellt, wird der gesamte Wertebereich der Zähler gleichmäßiger durchlaufen.

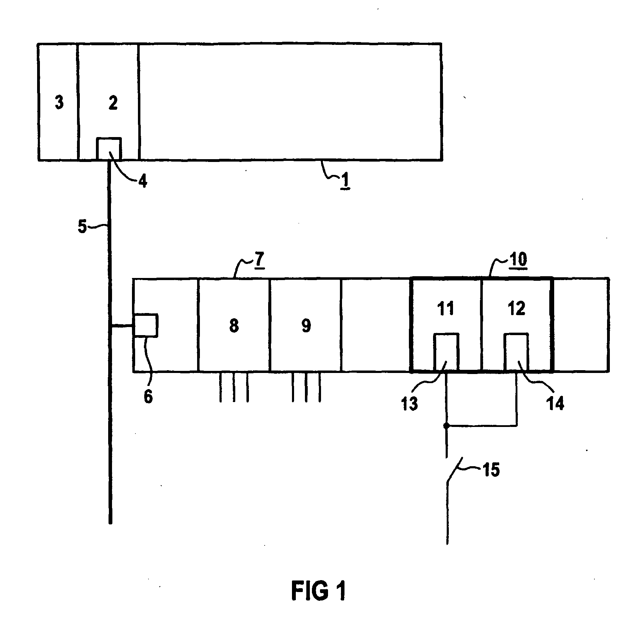

Ein Ausführungsbeispiel der Erfindung wird nachstehend anhand der Abbildungen näher erläutert. Fig. 1 zeigt einen Zentralrahmen 1 mit zentraler Verarbeitungseinheit 2 und Stromversorgungseinheit 3, der über eine Busanschaltung 4 mit einem Datenbus 5 verbunden ist. Dieser Datenbus 5 verbindet den Zentralrahmen 1 über eine weitere Busanschaltung 6 mit einem Erweiterungsrahmen 7, der seinerseits neben Digitaleingabe- und -ausgabeeinheiten 8, 9 die Zähleinrichtung 10 mit zumindest zwei Zählschaltungen 11, 12 enthält. Jede dieser Zählschaltungen 11, 12 enthält einen Zähler 13, 14, der um einen Schritt inkrementiert (bei Vorwärtszählung) bzw. dekrementiert (bei Rückwärtszählung) wird, wenn er einen Zählimpuls von einem mit jedem Zähler verbundenen Sensor 15 eines in den Figuren nicht näher dargestellten externen technischen Prozesses erhält.

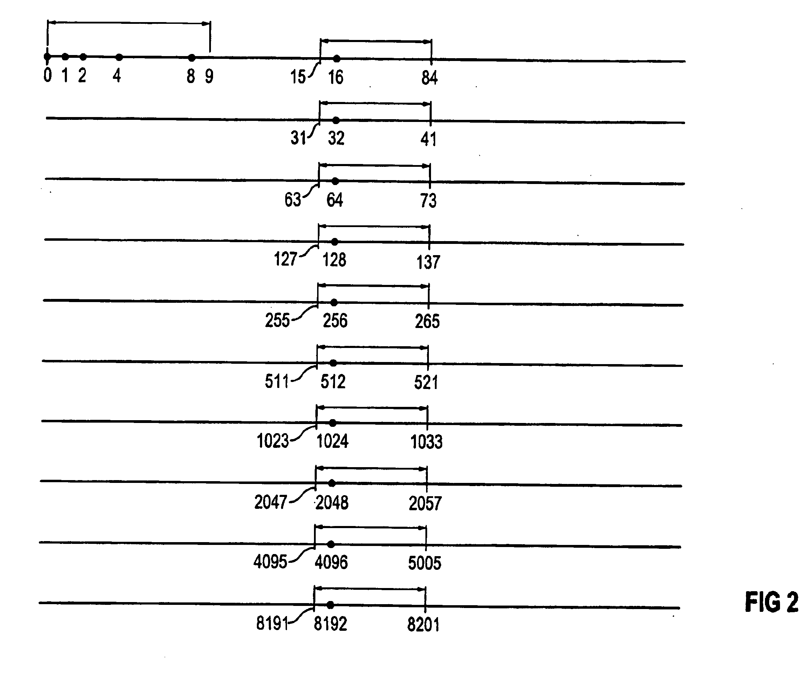

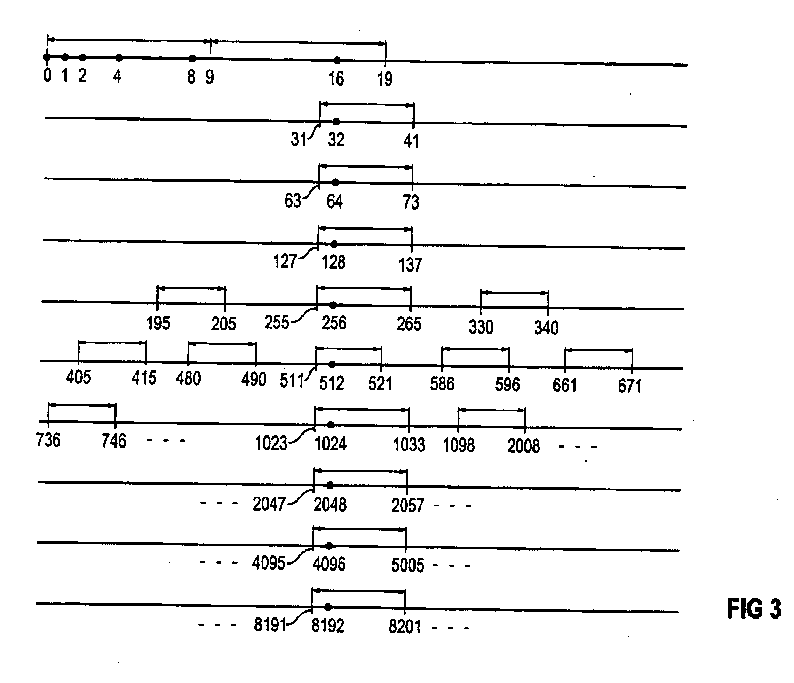

Die Figuren 2 und 3 zeigen ein Beispiel für einen Zählvorgang mit Vorbesetzung der Zähler. Diesem Beispiel liegt ein Zählvorgang zugrunde, bei dem nach jeweils 10 Zählschritten ein Alarm ausgelöst werden soll; der Zählerüberlauf 2¹³ = 8192 würde bei kontinuierlicher Zählung erst nach einem Monat erreicht. Um die Sicherheitsvorschriften einzuhalten, ist es jedoch notwendig, den Zählerüberlauf 2¹³ schon nach 24 Stunden zu erreichen. Unter der Annahme, daß die Zählimpulse einigermaßen regelmäßig auftreten, treffen 8192 : 30 ≅ 273 Zählimpulse pro Tag ein. Da nach 10 Zählimpulsen ein Alarm ausgelöst wird, bedeutet dies, daß pro Tag ungefähr 27 Alarme auftreten. Pro Tag sind also 27 Zählintervalle mit 27 Startwerten festzulegen. Würden diese gleichmäßig auf den Wertebereich 2¹³ verteilt, erhielte man einen Abstand von 8192 : 27 ≅ 303 zwischen den einzelnen Startwerten und würde also von 0 bis 9, von 302 bis 312, von 605 bis 615, etc. zählen. Dies ist jedoch insofern nicht ohne weiteres zulässig, als nicht alle Übergänge 2ⁿ-1 auf 2ⁿ (die Zahlen 2ⁿ sind in den Figuren 5 und 6 durch einen Punkt hervorgehoben) durchgeführt würden; beispielsweise wäre schon der Übergang von 15 auf 16 (= 2⁴) nicht abgedeckt. Daher werden die Zählintervalle zunächst fortlaufend, d.h. ohne Abstand, gesetzt (im Beispiel also 0-9, 9-19), bis im Zählintervall keine Potenz von 2 mehr vorkäme (im Beispiel zwischen 19 und 29). Anschließend besetzt man die Startwerte so vor, daß in jedem Zählintervall ein Übergang von 2ⁿ-1 auf 2ⁿ stattfindet (im Beispiel auf 15, 31, 63, ...). Auf diese Weise steigen jedoch die Abstände zwischen den einzelnen Zählintervallen sprunghaft an (Fig. 2). Der Abstand zwischen zwei Vorbesetzungswerten sollte aber die Distanz nicht überschreiten, die errechnet wurde, um innerhalb von 24 Stunden einen Überlauf herbeizuführen (im Beispiel 303). Somit treten in höheren Bereichen vermehrt Zählintervalle auf, die keine Potenz von 2 mehr beinhalten. Die Figur 3 verdeutlicht den so optimierten Zählablauf.

## Patentansprüche

1. Verfahren zum Betrieb einer zumindest 2-kanalig ausgebildeten Zähleinheit (10), insbesondere zum Einsatz in Verbindung mit sicherheitsgerichteten, speicherprogrammierbaren Steuerungen, mit zumindest zwei Zählschaltungen (11, 12), denen von einem externen technischen Prozeß ausgelöste Signale als Zählimpulse zugeführt werden, wobei die Zählimpulse ein Inkrementieren bzw. Dekrementieren eines Zählers (13, 14) in jeder Zählschaltung (11, 12) bewirken, wobei nach Durchlaufen von aus jeweils einer vorgegebenen Anzahl von Zählschritten zwischen einem Startwert und einem Grenzwert bestehenden Zählintervallen jedesmal ein Alarmsignal ausgelöst wird und wobei ein Vergleich der Zähler (13, 14) erfolgt,
**dadurch gekennzeichnet,**
**daß** nach jedem Durchlaufen eines Zählintervalls die Zähler (13, 14) für das nächste Zählintervall mit einem neuen Startwert vorbesetzt werden, der derart festgesetzt ist, daß bis zum Erreichen des Zählerüberlaufs alle Übergange zwischen einem Zählwert 2ⁿ-1 und einen Zählwert 2ⁿ in Zählintervallen zu liegen kommen.

2. Verfahren nach Anspruch 1,
**dadurch gekennzeichnet,**
**daß** kontinuierlich ohne Abstand zwischen den Zählintervallen gezählt wird, solange im Zählintervall eine Potenz von 2 vorkommt.

3. Verfahren nach Anspruch 1 oder 2,
**dadurch gekennzeichnet,**
**daß** der Vergleich der Zähler (13, 14) beim Auslösen des Alarmsignals erfolgt.

## Claims

1. Method for operating an at least 2-channel counting unit (10), in particular for use in connection with safety-related, programmable controllers, having at least two counting circuits (11, 12), to which signals triggered by an external technical process are fed as counting pulses, the counting pulses effecting an incrementation or decrementation of a counter (13, 14) in each counting circuit (11, 12), an alarm signal being triggered each time on completion of counting intervals consisting of a predefined number of counting steps in each case between a start value and a limiting value, and a comparison of the counters (13, 14) taking place,
**characterised in that**
after each completion of a counting interval the counters (13, 14) are prepopulated for the next counting interval with a new start value which is set such that until the counters overflow all transitions between a counting value 2ⁿ-1 and a counting value 2ⁿ come to lie in counting intervals.

2. Method according to claim 1,
**characterised in that**
counting is continuous, without any spacing between the counting intervals, so long as a power of 2 occurs in the counting interval.

3. Method according to claim 1 or 2,
**characterised in that**
the comparison of the counters (13, 14) takes place when the alarm signal is triggered.

## Revendications

1. Procédé pour faire fonctionner une unité ( 10 ) de comptage ayant au moins deux canaux, notamment à utiliser en liaison avec des automates programmables de sécurité, comprenant au moins deux circuits ( 11, 12 ) de comptage, auxquels sont envoyés comme impulsions de comptage, des signaux déclenchés par un processus technique extérieur, dans lequel les impulsions de comptage provoquent une incrémentation ou une décrémentation d'un compteur ( 13, 14 ) dans chaque circuit ( 11, 12 ) de comptage, dans lequel, après parcours d'intervalles de comptage constitués respectivement d'un nombre prescrit de stades de comptage entre une valeur initiale et une valeur limite, on déclenche chaque fois un signal d'alerte et dans lequel on effectue une comparaison des compteurs ( 13, 14 ),
**caractérisé**
**en ce qu'**après chaque parcours d'un intervalle de comptage, on met à l'avance dans les compteurs ( 13, 14 ), pour l'intervalle de comptage suivant, une nouvelle valeur initiale qui est fixée de manière à ce que, jusqu'à ce qu'on atteigne le dépassement du compteur, toutes les transitions entre une valeur de comptage 2ⁿ-1 et une valeur de comptage 2ⁿ viennent se mettre dans des intervalles de comptage.

2. Procédé suivant la revendication 1,
**caractérisé en ce que** l'on compte en continu, sans distance entre les intervalles de comptage, tant qu'il y a une puissance de 2 dans l'intervalle de comptage.

3. Procédé suivant la revendication 1 ou 2,
**caractérisé en ce que** l'on effectue la comparaison des compteurs ( 13, 14 ) lors du déclenchement du signal d'alerte.
